# EUROPEAN PATENT APPLICATION

(11) **EP 4 742 752 A1**
(43) Date of publication of application: **13.05.2026**
(21) Application number: 24847915.6
(22) Date of filing: 02.07.2024
(51) Int. Cl.: H04W 36/00

(54) **CHANNEL SWITCHING METHOD AND APPARATUS**

(30) Priority: 29.07.2023 CN 202310951076
(71) Applicant: Huawei Technologies Co., Ltd., Shenzhen, Guangdong 518129 (CN)
(72) Inventor: WANG, Zhenzhong, Shenzhen, Guangdong 518129 (CN); LIU, Xiangfei, Shenzhen, Guangdong 518129 (CN); ZHAO, Yonghao, Shenzhen, Guangdong 518129 (CN)
(74) Representative: Gill Jennings & Every LLP
(86) International application number: PCT/CN2024/103206
(87) International publication number: WO 2025/025955

(57) **Abstract**

This application provides a channel switching method and an apparatus. The channel switching method includes: A wireless device performs communication frame transmission on a first channel, and performs radar sensing on a second channel; and before performing communication frame transmission on the first channel, the wireless device stops performing radar sensing on the second channel; or before performing radar sensing on the second channel, the wireless device stops performing communication frame transmission on the first channel. This application is implemented, so that the wireless device can implement both the communication frame transmission and the radar sensing, and improve radar sensing performance.

## Description

This application claims priority to Chinese Patent Application No. 202310951076.1, filed with the China National Intellectual Property Administration on July 29, 2023, and entitled "CHANNEL SWITCHING METHOD AND APPARATUS", which is incorporated herein by reference in its entirety.

### TECHNICAL FIELD

This application relates to the field of communication technologies, and in particular, to a channel switching method and an apparatus.

### BACKGROUND

There are more wireless local area network (English: Wireless Local Area Network, WLAN) devices, and usually, the WLAN devices may perform communication, for example, receive and send communication frames. However, in a plurality of scenarios, there is also a strong need for using WLAN devices for radar sensing. Therefore, how to enable WLAN devices to implement both communication frame transmission and radar sensing is an urgent problem to be resolved.

### SUMMARY

This application provides a channel switching method and an apparatus, so that a wireless device can implement both communication frame transmission and radar sensing.

According to a first aspect, an embodiment of this application provides a channel switching method. The method may be performed by a wireless device, or may be performed by a component (for example, a processor, a chip, or a chip system) of the wireless device. The channel switching method may include:

A wireless device performs communication frame transmission on a first channel, and performs radar sensing on a second channel; and
before performing communication frame transmission on the first channel, the wireless device stops performing radar sensing on the second channel; or before performing radar sensing on the second channel, the wireless device stops performing communication frame transmission on the first channel.

According to the method described in the first aspect, the wireless device may separately perform communication frame transmission and radar sensing on different channels; and before performing communication frame transmission on the first channel, stop performing radar sensing on the second channel; or before performing radar sensing on the second channel, stop performing communication frame transmission on the first channel, so that the wireless device can implement both the communication frame transmission and the radar sensing.

In a possible implementation, before performing radar sensing on the second channel, the method further includes:
The wireless device switches from the first channel to the second channel, where the first channel and the second channel are different channels supported by the wireless device.

The manner is implemented, so that before the wireless device performs radar sensing on the second channel, the wireless device needs to switch from the first channel to the second channel. That is, the wireless device may implement communication frame transmission and radar sensing on different channels through channel switching.

In a possible implementation, the first channel is a channel that is detected to be busy by the wireless device, and the second channel is a channel that is detected to be idle by the wireless device.

The manner is implemented, so that when the first channel on which the wireless device performs communication frame transmission is detected to be busy, the wireless device switches to the second channel that is detected to be idle for performing radar sensing, to improve radar sensing performance.

In a possible implementation, that the wireless device performs radar sensing on the second channel includes:
The wireless device performs one or more radar sensing operations on the second channel, where one radar sensing operation includes sending a self clear to send Self-CTS frame and sending a radar signal associated with the Self-CTS frame.

The manner is implemented, so that the wireless device can perform the one or more radar sensing operations on the second channel, and can flexibly implement a quantity of radar sensing operations on the second channel.

In a possible implementation, after performing radar sensing on a second channel, the method further includes:
The wireless device switches from the second channel to the first channel, and continues to perform communication frame transmission on the first channel.

The manner is implemented, so that after performing radar sensing on the second channel, the wireless device needs to switch to the first channel to continue to perform communication frame transmission, to ensure transmission of a communication frame.

In a possible implementation, one radar sensing procedure includes one cyclic process or a plurality of cyclic processes, and the plurality of cyclic processes are continuous in terms of time;
one cyclic process includes a process of switching from the first channel to the second channel, performing radar sensing on the second channel, and switching from the second channel to the first channel; and
the one radar sensing procedure is a procedure including a preset quantity of radar sensing operations, a time interval between two adjacent radar sensing operations in the preset quantity of radar sensing operations is a first time interval, and one radar sensing operation includes sending a self clear to send Self-CTS frame and sending a radar signal associated with the Self-CTS frame.

The manner is implemented, so that the one radar sensing procedure may include the one cyclic process, or may include the plurality of cyclic processes. If the one radar sensing procedure includes the one cyclic process, to be specific, the wireless device switches from the first channel to the second channel, and then switches to the first channel after performing the preset quantity of radar sensing operations on the second channel, to avoid a waste of air interface resources caused by channel switching.

In a possible implementation, communication frame transmission on the first channel exists between two adjacent cyclic processes in the plurality of cyclic processes.

The manner is implemented, so that the communication frame transmission on the first channel exists between the two adjacent cyclic processes. In other words, each time after switching from the second channel to the first channel, the wireless device performs communication frame transmission on the first channel, so that resources are fully utilized, and timeliness of the communication frame transmission is ensured as much as possible.

In a possible implementation, the second channel includes the first channel, and a bandwidth of the second channel is greater than a bandwidth of the first channel.

The manner is implemented, so that the second channel on which the radar sensing is performed includes the first channel on which the communication frame transmission is performed, and the bandwidth of the second channel is greater than the bandwidth of the first channel. In other words, when it is ensured that the channel on which the communication frame transmission is performed remains unchanged, the channel on which the radar sensing is performed is broadened, thereby improving radar sensing performance.

In a possible implementation, a primary channel on the first channel is the same as a primary channel on the second channel.

The manner is implemented, so that after the channel on which the radar sensing is performed is broadened, the primary channel remains unchanged, and impact on the communication frame transmission is minimized.

In a possible implementation, before the wireless device performs communication frame transmission on the first channel, and performs radar sensing on the second channel, the method further includes:
When a radar sensing service needs to be started, the wireless device adjusts an operating bandwidth from a first bandwidth to a second bandwidth, where the first bandwidth is the bandwidth of the first channel, and the second bandwidth is the bandwidth of the second channel.

The manner is implemented, so that the operating bandwidth of the wireless device is originally the bandwidth of the first channel on which the communication frame transmission is performed. When the radar sensing service needs to be started, the operating bandwidth is broadened to the larger second bandwidth, so that the radar sensing is performed on the broadened larger bandwidth, thereby improving radar sensing performance.

In a possible implementation, before the wireless device switches from the first channel to the second channel, or before the wireless device adjusts the operating bandwidth from the first bandwidth to the second bandwidth, the method further includes:
The wireless device sends a first frame on the first channel, where the first frame includes first indication information, and the first indication information indicates that the wireless device is to stop performing communication frame transmission on the first channel; or
the first frame includes second indication information, the second indication information indicates time in which the wireless device occupies the first channel, and before time at which the wireless device ends occupying the first channel, the wireless device stops performing communication frame transmission on the first channel.

The manner is implemented, so that before the wireless device switches from the first channel to the second channel, the wireless device sends the first frame, and avoids, by using the first indication information or the second indication information, a packet loss problem caused because another device still sends a data packet to the wireless device on the first channel after the wireless device switches to the second channel. Before the wireless device adjusts the operating bandwidth, the wireless device also sends the first frame, and avoids, by using the first indication information or the second indication information, the packet loss problem caused because the another device still sends the data packet to the wireless device on the first channel during adjustment of the operating bandwidth by the wireless device.

In a possible implementation, the wireless device is a station STA, and the method further includes:
The wireless device receives a first acknowledgement frame for the first frame on the first channel.

The manner is implemented, so that the wireless device is the STA. After sending the first frame, the STA needs to wait to receive the first acknowledgement frame for the first frame; and when receiving the first acknowledgement frame, the wireless device switches from the first channel to the second channel; or when receiving the first acknowledgement frame, the wireless device adjusts the operating bandwidth from the first bandwidth to the second bandwidth. The wireless device waits to receive the acknowledgement frame for the first frame, so that it can be ensured that a receive end receives the first frame, and does not still send data to the wireless device on the first channel after the wireless device switches to the second channel, or does not still send data to the wireless device during adjustment of the bandwidth by the wireless device, thereby improving transmission reliability.

In a possible implementation, after the wireless device switches from the second channel to the first channel, or after the wireless device adjusts the operating bandwidth from the first bandwidth to the second bandwidth, the method further includes:
The wireless device sends a second frame on the first channel, where the second frame includes third indication information, and the third indication information indicates that the wireless device is to start to perform communication frame transmission on the first channel.

The manner is implemented, so that after the wireless device switches from the second channel to the first channel or adjusts to complete the operating bandwidth, the wireless device sends the second frame on the first channel, and enables, by using the third indication information, another device to learn that the wireless device can perform communication frame transmission with the wireless device on the first channel. Therefore, time in which communication frame transmission is performed on the first channel can be flexibly controlled.

In a possible implementation, the wireless device is a station STA, and the method further includes:
The wireless device receives a second acknowledgement frame for the second frame on the first channel.

The manner is implemented, so that the wireless device is the STA. After sending the second frame, the wireless device needs to wait to receive the second acknowledgement frame for the second frame; and when receiving the second acknowledgement frame, the wireless device may continue to perform communication frame transmission on the first channel. Alternatively, when the wireless device receives the second acknowledgement frame, the wireless device may perform communication frame transmission on the first channel and perform radar sensing on the second channel. Because the second acknowledgement frame is received, it may be ensured that a receiving device has received the first frame, and then performs a corresponding operation, so that transmission reliability can be improved.

In a possible implementation, the time at which the wireless device ends occupying the first channel is time at which the wireless device switches from the second channel to the first channel, or the time at which the wireless device ends occupying the first channel is after time at which the wireless device switches from the second channel to the first channel.

The manner is implemented, so that before the wireless device switches from the first channel to the second channel, the wireless device indicates, by using the second indication information in the first frame, that the time at which the wireless device ends occupying the first channel is at least time at which the wireless device switches from the second channel to the first channel. Therefore, the wireless device may indicate another device not to send data to the wireless device during occupation of the first channel, and does not need to perform indication again after switching from the second channel to the first channel, so that air interface resources can be saved.

In a possible implementation, the time at which the wireless device ends occupying the first channel is time at which the wireless device completes adjusting the operating bandwidth from the first bandwidth to the second bandwidth, or the time at which the wireless device ends occupying the first bandwidth is after time at which the wireless device completes adjusting the operating bandwidth from the first bandwidth to the second bandwidth.

The manner is implemented, so that before the wireless device adjusts the operating bandwidth, the wireless device indicates, by using the second indication information in the first frame, that the time at which the wireless device ends occupying the first channel is at least time at which the wireless device completes adjusting the operating bandwidth. Therefore, the wireless device may indicate another device not to send data to the wireless device during occupation of the first channel, and does not need to perform indication again after completing adjustment of the operating bandwidth, so that air interface resources can be saved.

In a possible implementation, the method further includes:
When the radar sensing service needs to be stopped, the wireless device adjusts the operating bandwidth from the second bandwidth to the first bandwidth.

The manner is implemented, so that when the radar sensing service needs to be stopped, for example, when the radar sensing service needs to be stopped after a plurality of radar sensing procedures end, the wireless device needs to adjust the operating bandwidth from the second bandwidth to the first bandwidth, and bandwidth resources are saved.

In a possible implementation, before the wireless device adjusts the operating bandwidth from the second bandwidth to the first bandwidth, the method further includes:
The wireless device sends a third frame on the first channel, where the third frame includes first indication information, and the first indication information indicates that the wireless device is to stop performing communication frame transmission on the first channel; or
the third frame includes second indication information, the second indication information indicates time in which the wireless device occupies the first channel, and before time at which the wireless device ends occupying the first channel, the wireless device stops performing communication frame transmission on the first channel.

The manner is implemented, so that before the wireless device adjusts the operating bandwidth, the wireless device sends the third frame, and avoids, by using the first indication information or the second indication information, a packet loss problem caused because another device still sends a data packet to the wireless device on the first channel during adjustment of the operating bandwidth by the wireless device.

In a possible implementation, the wireless device is a station STA, and the method further includes:
The wireless device receives a third acknowledgement frame for the third frame on the first channel.

The manner is implemented, so that the wireless device is the STA. After sending the third frame, the wireless device waits to receive the third acknowledgement frame for the third frame, and adjusts the operating bandwidth from the second bandwidth to the first bandwidth when receiving the third acknowledgement frame, so that it can be ensured that a receive end receives the third frame, and does not still send data to the wireless device during adjustment of the bandwidth by the wireless device, thereby improving transmission reliability.

In a possible implementation, after the wireless device adjusts the operating bandwidth from the second bandwidth to the first bandwidth, the method further includes:
The wireless device sends a fourth frame on the first channel, where the fourth frame includes third indication information, and the third indication information indicates that the wireless device is to start to perform communication frame transmission on the first channel.

The manner is implemented, so that after the wireless device adjusts to complete the operating bandwidth, the wireless device sends the fourth frame on the first channel, and enables, by using the third indication information, another device to learn that the wireless device can perform communication frame transmission with the wireless device on the first channel. Therefore, time in which communication frame transmission is performed on the first channel can be flexibly controlled.

In a possible implementation, the wireless device is a station STA, and the method further includes:

The wireless device receives a fourth acknowledgement frame for the fourth frame on the first channel.

The manner is implemented, so that the wireless device is the STA. After sending the fourth frame, the wireless device needs to wait to receive the fourth acknowledgement frame for the fourth frame; and when receiving the fourth acknowledgement frame, the wireless device may perform communication frame transmission on the first channel and perform radar sensing on the second channel. Because the fourth acknowledgement frame is received, it may be ensured that a receiving device has received the fourth frame, and then performs communication frame transmission, so that transmission reliability can be improved.

In a possible implementation, the time at which the wireless device ends occupying the first channel is time at which the wireless device completes adjusting the operating bandwidth from the second bandwidth to the first bandwidth, or the time at which the wireless device ends occupying the first channel is after time at which the wireless device completes adjusting the operating bandwidth from the second bandwidth to the first bandwidth.

The manner is implemented, so that before the wireless device adjusts the operating bandwidth, the wireless device indicates, by using the second indication information in the third frame, that the time at which the wireless device ends occupying the first channel is at least time at which the wireless device completes adjusting the operating bandwidth. Therefore, the wireless device may indicate another device not to send data to the wireless device during occupation of the first channel, and does not need to perform indication again after completing adjustment of the operating bandwidth, so that air interface resources can be saved.

According to a second aspect, an embodiment of this application provides a communication apparatus. The communication apparatus includes:
a transceiver unit, configured to: perform communication frame transmission on a first channel, and perform radar sensing on a second channel, where
before performing communication frame transmission on the first channel, the wireless device stops performing radar sensing on the second channel; or before performing radar sensing on the second channel, the wireless device stops performing communication frame transmission on the first channel.

In a possible implementation, the communication apparatus further includes:
a processing unit, configured to switch from the first channel to the second channel, where
the first channel and the second channel are different channels supported by the wireless device.

In a possible implementation, the first channel is a channel that is detected to be busy by the wireless device, and the second channel is a channel that is detected to be idle by the wireless device.

In a possible implementation, the processing unit is further configured to switch from the second channel to the first channel; and
the transceiver unit is further configured to continue to perform communication frame transmission on the first channel.

In a possible implementation, one radar sensing procedure includes one cyclic process or a plurality of cyclic processes, and the plurality of cyclic processes are continuous in terms of time;
one cyclic process includes a process of switching from the first channel to the second channel, performing radar sensing on the second channel, and switching from the second channel to the first channel; and
the one radar sensing procedure is a procedure including a preset quantity of radar sensing operations, a time interval between two adjacent radar sensing operations in the preset quantity of radar sensing operations is a first time interval, and one radar sensing operation includes sending a self clear to send Self-CTS frame and sending a radar signal associated with the Self-CTS frame.

In a possible implementation, the second channel includes the first channel, and a bandwidth of the second channel is greater than a bandwidth of the first channel.

In a possible implementation, a primary channel on the first channel is the same as a primary channel on the second channel.

In a possible implementation, the processing unit is further configured to: when a radar sensing service needs to be started, the wireless device adjusts an operating bandwidth from a first bandwidth to a second bandwidth, where the first bandwidth is the bandwidth of the first channel, and the second bandwidth is the bandwidth of the second channel.

In a possible implementation, the transceiver unit is further configured to send a first frame on the first channel, where the first frame includes first indication information, and the first indication information indicates that the wireless device is to stop performing communication frame transmission on the first channel; or
the first frame includes second indication information, the second indication information indicates time in which the wireless device occupies the first channel, and before time at which the wireless device ends occupying the first channel, the wireless device stops performing communication frame transmission on the first channel.

In a possible implementation, the wireless device is a station STA, and the transceiver unit is specifically configured to receive a first acknowledgement frame for the first frame on the first channel.

In a possible implementation, the transceiver unit is further configured to send a second frame on the first channel, where the second frame includes third indication information, and the third indication information indicates that the wireless device is to start to perform communication frame transmission on the first channel.

In a possible implementation, the transceiver unit is further configured to receive a second acknowledgement frame for the second frame on the first channel.

In a possible implementation, the time at which the wireless device ends occupying the first channel is time at which the wireless device switches from the second channel to the first channel, or the time at which the wireless device ends occupying the first channel is after time at which the wireless device switches from the second channel to the first channel.

In a possible implementation, the time at which the wireless device ends occupying the first channel is time at which the wireless device completes adjusting the operating bandwidth from the first bandwidth to the second bandwidth, or the time at which the wireless device ends occupying the first channel is after time at which the wireless device completes adjusting the operating bandwidth from the first bandwidth to the second bandwidth.

In a possible implementation, the processing unit is further configured to: when the radar sensing service needs to be stopped, adjust the operating bandwidth from the second bandwidth to the first bandwidth.

According to a third aspect, an embodiment of this application provides a communication apparatus. The communication apparatus includes a processor, configured to perform the method according to any possible implementation of the first aspect. Alternatively, the processor is configured to execute a program stored in a memory; and when the program is executed, the method according to any possible implementation of the first aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal or send a signal.

According to a fourth aspect, an embodiment of this application provides a communication apparatus. The communication apparatus includes a logic circuit and an interface. The logic circuit is coupled to the interface. The interface is configured to receive information. The logic circuit is configured to perform a processing operation.

According to a fifth aspect, an embodiment of this application provides a computer-readable storage medium. The computer-readable storage medium is configured to store a computer program. When the computer program is run on a computer, the method according to any possible implementation of the first aspect is performed.

According to a sixth aspect, an embodiment of this application provides a computer program product. The computer program product includes a computer program or computer code. When the computer program product is run on a computer, the method according to any possible implementation of the first aspect is performed.

According to a seventh aspect, an embodiment of this application provides a computer program. When the computer program is run on a computer, the method according to any possible implementation of the first aspect is performed.

According to an eighth aspect, an embodiment of this application provides a wireless communication system. The wireless communication system includes at least one wireless device.

For technical effect achieved in the second aspect to the eighth aspect, refer to the technical effect in the first aspect or beneficial effect in the following method embodiments. Details are not described herein again.

### BRIEF DESCRIPTION OF DRAWINGS

FIG. 1 is a diagram of a communication system according to an embodiment of this application;
FIG. 2a is a diagram of one radar sensing operation according to an embodiment of this application;
FIG. 2b is a diagram of one radar sensing procedure according to an embodiment of this application;
FIG. 3 is a schematic flowchart of a channel switching method according to an embodiment of this application;
FIG. 4a is a schematic flowchart of another channel switching method according to an embodiment of this application;
FIG. 4b is a diagram of a cyclic process according to an embodiment of this application;
FIG. 4c is a diagram of a time sequence of a radar sensing procedure according to an embodiment of this application;
FIG. 4d is a diagram of a time sequence of a radar sensing procedure according to an embodiment of this application;
FIG. 4e is a diagram of a time sequence of a radar sensing procedure according to an embodiment of this application;
FIG. 5a is a schematic flowchart of still another channel switching method according to an embodiment of this application;
FIG. 5b is a diagram of operating bandwidth adjustment according to an embodiment of this application;
FIG. 5c is a diagram of operating bandwidth adjustment according to an embodiment of this application; and
FIG. 6 to FIG. 8 are diagrams of structures of communication apparatuses according to embodiments of this application.

### DESCRIPTION OF EMBODIMENTS

To make objectives, technical solutions, and advantages of this application clearer, the following further describes this application with reference to the accompanying drawings.

Terms "first", "second", and the like in the specification, claims, and accompanying drawings of this application are merely used to distinguish between different objects, and are not used to describe a particular order. In addition, the terms "include", "have", and any variants thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device.

An "embodiment" mentioned in this specification means that a particular feature, structure, or characteristic described with reference to embodiments may be included in at least one embodiment of this application. The phrase shown in various locations in this specification may not necessarily be a same embodiment, and is not an independent or optional embodiment exclusive from another embodiment. It may be explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe an association relationship between associated objects, and indicates that three relationships may exist. For example, "A and/or B" may indicate: only A exists, only B exists, and both A and B exist, where A and B may be singular or plural. The character "/" usually indicates an "or" relationship between the associated objects. "At least one of the following items (pieces)" or a similar expression thereof means any combination of these items. For example, at least one item (piece) of a, b, or c may indicate a, b, c, "a and b", "a and c", "b and c", or "a, b, and c".

Embodiments of the present invention may be applied to a wireless local area network (Wireless Local Area Network, WLAN). Currently, a standard used in the WLAN is the institute of electrical and electronics engineers (English: Institute of Electrical and Electronics Engineers, IEEE) 802.11 series. The WLAN may include a plurality of basic service sets (Basic Service Sets, BSS), and the basic service set includes an access point (Access Point, AP) station and a non-access point station (None Access Point Station, non-AP STA). Each basic service set may include one AP and a plurality of non-AP STAs associated with the AP.

The AP is also referred to as a wireless access point, a hotspot, or the like. The AP is an access point for a mobile user to access a wired network, and is mainly deployed in a home, inside a building, and inside a campus, with a typical coverage radius of tens of meters to 100-odd meters. Certainly, the AP may alternatively be deployed outdoors. The AP is equivalent to a bridge that connects a wired network and a wireless network. A main function of the AP is to connect wireless network clients together, and then connect the wireless network to an Ethernet. Specifically, the AP may be a terminal device or a network device with a wireless fidelity (Wireless Fidelity, Wi-Fi) chip. Optionally, the AP may be a device supporting an 802.11ax standard. Further, optionally, the AP may be a device supporting a plurality of WLAN standards such as 802.11ac, 802.11n, 802.11g, 802.11b, and 802.11a.

The non-AP STA may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, and the like. Optionally, the station may support the 802.11ax standard. Further, optionally, the station supports a plurality of WLAN standards such as 802.11ac, 802.11n, 802.11g, 802.11b, and 802.11a.

For ease of description, the non-AP STA is collectively referred to as a STA in the following embodiments.

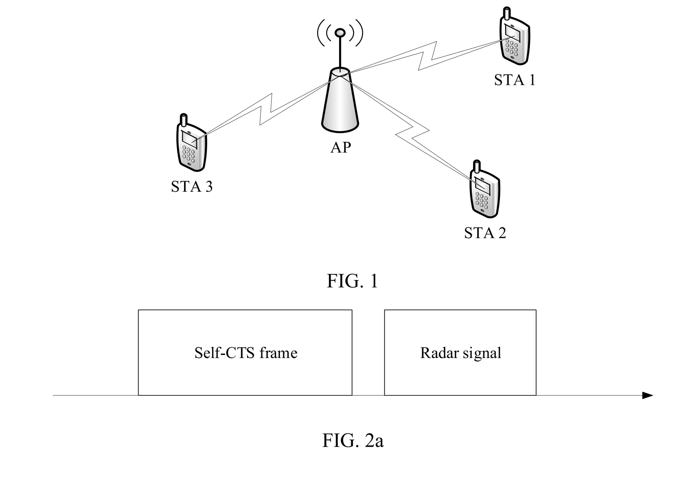

FIG. 1 is a diagram of a system of a typical WLAN deployment scenario, including one AP and three STAs. The AP separately communicates with a STA 1, a STA 2, and a STA 3.

Communication frame transmission may be performed between an AP and a STA, and a communication frame may also be referred to as a Wi-Fi service frame. In embodiments of this application, the AP or the STA may also perform radar sensing. For how to enable the AP or the STA not only to be capable of performing communication frame transmission but also to be capable of performing radar sensing, an implementation method provided in this application is as follows: The AP or the STA performs communication frame transmission on a first channel, and performs radar sensing on a second channel. Before performing communication frame transmission on the first channel, the AP or the STA stops performing radar sensing on the second channel; or before performing radar sensing on the second channel, the AP or the STA stops performing communication frame transmission on the first channel.

Before the method in this application is described in detail, some concepts in this application are first briefly described.

### 1. One radar sensing operation

In embodiments of this application, one radar sensing operation includes a self clear to send (self clear to send, Self-CTS) frame and a radar signal associated with the Self-CTS frame. FIG. 2a is a diagram of one radar sensing operation. The one radar sensing operation includes a Self-CTS frame and a radar signal that follows the Self-CTS frame. Self-CTS is a standard 802.11 control frame, and is used to contend for and clear a channel for subsequent radar signal transmission. Therefore, a network allocation vector (network allocation vector, NAV) in the Self-CTS frame needs to be set to be capable of protecting a moment at which current radar signal transmission ends. For example, a time interval between the Self-CTS frame and a radar signal to be currently transmitted is less than or equal to one time interval. For example, the time interval is 16 µs. For example, a value range of duration T1 of one radar sensing operation may be 50 µs to 500 µs. It may be understood that the duration T1 may alternatively be other duration. This is not limited in this application.

### 2. One radar sensing procedure

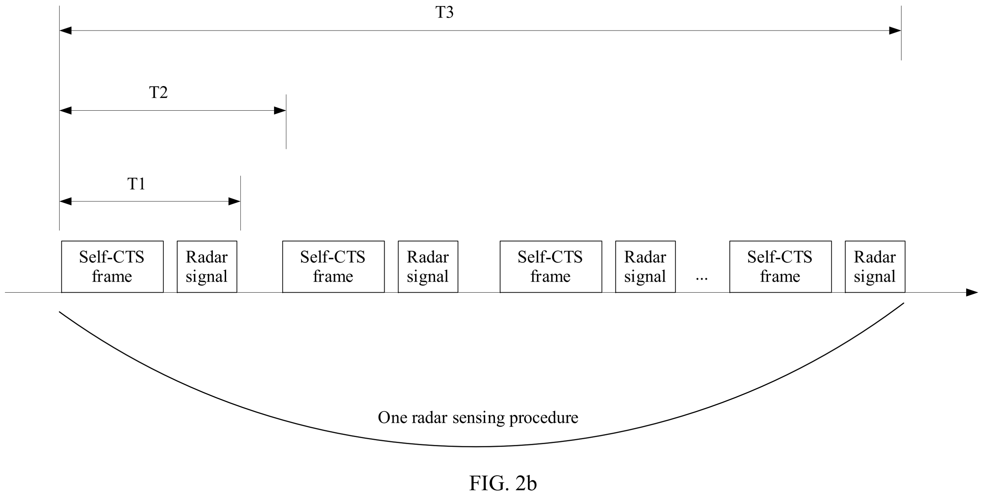

In embodiments of this application, the one radar sensing procedure is a procedure including a preset quantity of radar sensing operations, and the preset quantity of times may be preconfigured. A time interval between two adjacent radar sensing operations in the preset quantity of radar sensing operations is a first time interval, and one radar sensing operation includes sending a Self-CTS frame and sending a radar signal associated with the Self-CTS frame. For example, FIG. 2b is a diagram of one radar sensing procedure. Duration of one radar sensing operation may be T1, a start time interval between two adjacent radar sensing operations is T2, and all T2s in the one radar sensing procedure may be a same value or may not be a same value. Duration of all radar sensing operations in the one radar sensing procedure is T3. For example, a value range of T1 may be 50 µs to 500 µs. A value range of T2 may be 1 ms to 10 ms, and a value range of T3 may be 50 µs to 1000 ms, which means that one radar sensing procedure is allowed to include only one radar sensing operation.

The following describes embodiments of data transmission methods in this application by using examples. It should be noted that technical solutions (or referred to as embodiments) of this application may be independently implemented or may be implemented in combination based on some internal relationships. This is not limited in this application. In addition, various terms and definitions in embodiments may be mutually referenced. In each embodiment of this application, different implementations may be implemented in combination or may be independently implemented.

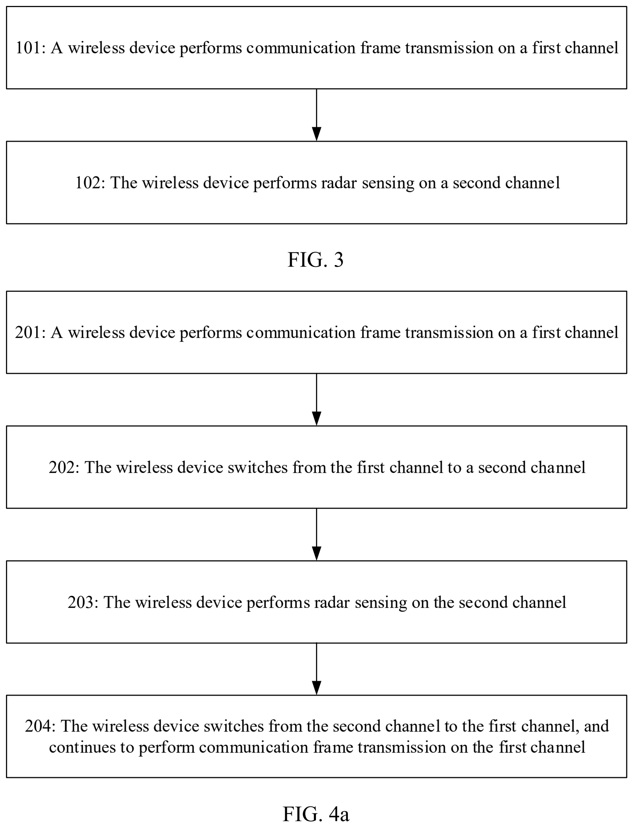

FIG. 3 is a schematic flowchart of a channel switching method according to an embodiment of this application. FIG. 1 may be an architectural diagram of a system to which the channel switching method is applicable. As shown in FIG. 3, the method may include: 101 and 102. An execution sequence of the steps is not limited in this embodiment of this application. The channel switching method in this embodiment of this application may include some or all of the following steps:
101: A wireless device performs communication frame transmission on a first channel.
102: The wireless device performs radar sensing on a second channel.

Before performing communication frame transmission on the first channel, the wireless device stops performing radar sensing on the second channel; or before performing radar sensing on the second channel, the wireless device stops performing communication frame transmission on the first channel.

The wireless device in this embodiment of this application may be a STA, or may be an AP. Alternatively, a communication frame may be replaced with a Wi-Fi service frame.

In an implementation, the first channel and the second channel are different channels supported by the wireless device. Before performing radar sensing on the second channel, the wireless device needs to switch from the first channel to the second channel, to perform radar sensing on the second channel. For example, when detecting that the first channel on which the communication frame transmission is performed is busy, the wireless device may select one second channel that is detected to be idle, and perform radar sensing on the second channel. For example, the wireless device may detect, by using carrier sense multiple access with collision avoidance (Carrier Sense Multiple Access with Collision Avoidance, CSMA/CA), whether a channel is idle or busy.

Further, optionally, the wireless device may switch from the second channel to the first channel, and continue to perform communication frame transmission on the first channel.

The wireless device switches from the first channel to the second channel, and the wireless device stops performing communication frame transmission on the first channel. The wireless device switches from the second channel to the first channel, and the wireless device stops performing radar sensing on the second channel. For specific descriptions of this implementation, refer to descriptions of an embodiment in FIG. 4a. Details are not described.

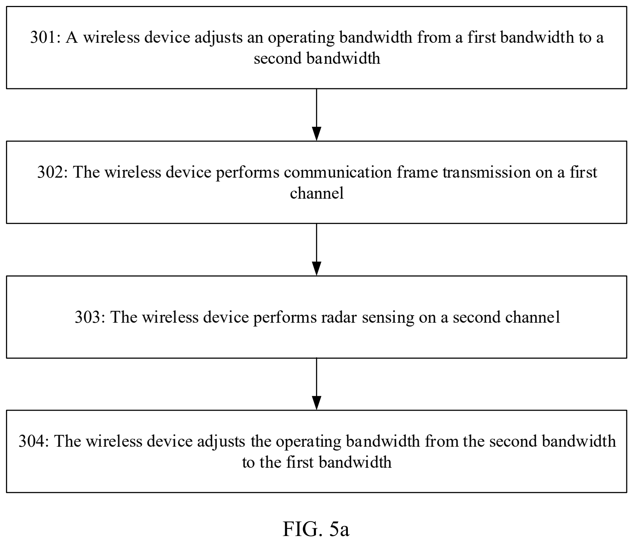

In another implementation, the second channel includes the first channel, and a bandwidth of the second channel is greater than a bandwidth of the first channel. For example, the wireless device adjusts an operating bandwidth, and adjusts the operating bandwidth from an original first bandwidth to a second bandwidth. The first bandwidth is the bandwidth of the first channel used for the communication frame transmission, and the second bandwidth is the bandwidth of the second channel. After adjusting the operating bandwidth, the wireless device separately performs communication frame transmission on the first channel and performs radar sensing on the second channel in a time division manner. For specific descriptions of this implementation, refer to descriptions of an embodiment in FIG. 5a. Details are not described.

It may be understood that the communication frame transmission in this embodiment of this application may include receiving a communication frame and/or sending a communication frame.

FIG. 4a is a schematic flowchart of another channel switching method according to an embodiment of this application. FIG. 1 may be an architectural diagram of a system to which the channel switching method is applicable. As shown in FIG. 4a, the method may include: 201 to 204. An execution sequence of the steps is not limited in this embodiment of this application. The channel switching method in this embodiment of this application may include some or all of the following steps, for example, may include steps 201 to 203 in steps 201 to 204, or may include step 202 to step 204. This is not limited in this application. The following describes the steps by using examples.

201: A wireless device performs communication frame transmission on a first channel.

202: The wireless device switches from the first channel to a second channel.

In some implementations, the first channel and the second channel are different channels supported by the wireless device. For example, the first channel is a channel that is detected to be busy by the wireless device, and the second channel is a channel that is detected to be idle by the wireless device.

For example, when radar sensing needs to be performed on the first channel, the wireless device switches from the first channel to the second channel.

In some implementations, to avoid a packet loss problem caused because another device still sends a communication frame to the wireless device on the first channel after the wireless device switches to the second channel, before the wireless device switches from the first channel to the second channel, the wireless device sends a first frame on the first channel. The first frame includes first indication information or second indication information. The following separately describes the first indication information and the second indication information by using examples.

For example, the first indication information indicates that the wireless device is to stop performing communication frame transmission on the first channel. For example, the first indication information indicates that the wireless device is to enter a sleep state. For example, the first frame may be a null frame (namely, a NULL frame), and the first indication information may be carried in a power saving (Power Saving, PS) field in the NULL frame. When the PS field includes a first identifier, it indicates that the wireless device stops performing communication frame transmission on the first channel. For example, the first identifier may be 1.

For example, the second indication information indicates time in which the wireless device occupies the first channel. Alternatively, the second indication information may indicate time at which the wireless device ends occupying the first channel. Before the time at which the wireless device ends occupying the first channel, the wireless device stops performing communication frame transmission on the first channel. Correspondingly, the another device does not send the communication frame to the wireless device before the time at which the wireless device ends occupying the first channel, to avoid the packet loss problem. In an example, the time at which the wireless device ends occupying the first channel is time at which the wireless device switches from the second channel to the first channel. In another example, the time at which the wireless device ends occupying the first channel may be after time at which the wireless device switches from the second channel to the first channel. For example, the first frame may be a Self-CTS frame, the second indication information may be carried in an NAV in the Self-CTS frame, and a value of the NAV needs to indicate at least time at which the wireless device switches from the second channel to the first channel.

In some embodiments, the wireless device is a STA. After sending the first frame, the wireless device may further receive a first acknowledgement frame for the first frame on the first channel. The first acknowledgement frame may be an acknowledgement ACK (Acknowledgement) frame. When the wireless device receives the first acknowledgement frame for the first frame on the first channel, the wireless device switches from the first channel to the second channel. For example, if the first frame is a NULL frame, the first acknowledgement frame may be an ACK frame for the NULL frame.

203: The wireless device performs radar sensing on the second channel.

In some embodiments, the wireless device may perform one or more radar sensing operations on the second channel, where one radar sensing operation includes sending a Self-CTS frame and sending a radar signal associated with the Self-CTS frame.

204: The wireless device switches from the second channel to the first channel, and continues to perform communication frame transmission on the first channel.

In some embodiments, when the wireless device needs to perform communication frame transmission, the wireless device switches from the second channel to the first channel, and continues to perform communication frame transmission on the first channel. For example, when a quantity of to-be-sent communication frames buffered by the wireless device is greater than or equal to a threshold, the wireless device needs to switch from the second channel to the first channel.

In some implementations, after the wireless device switches from the second channel to the first channel, the wireless device sends a second frame on the first channel, where the second frame includes third indication information, and the third indication information indicates that the wireless device is to start to perform communication frame transmission on the first channel. For example, the third indication information indicates that the wireless device is to be in an awake state. When the wireless device is in the awake state, the wireless device may perform communication frame transmission on the first channel. For example, the second frame may be a NULL frame, and the third indication information may be carried in a PS field in the NULL frame. When the PS field includes a second identifier, it indicates that the wireless device starts to perform communication frame transmission on the first channel. For example, the second identifier may be 0.

In some embodiments, the wireless device is a STA. After sending the second frame, the wireless device may further receive a second acknowledgement frame for the second frame on the first channel. The second acknowledgement frame may be an ACK frame. When the wireless device receives the second acknowledgement frame for the second frame on the first channel, the wireless device continues to perform communication frame transmission on the first channel. For example, if the second frame is a NULL frame, the second acknowledgement frame may be an ACK frame for the NULL frame.

In this embodiment of this application, radar sensing is performed on an idler channel in a channel switching manner, to obtain better sensing performance.

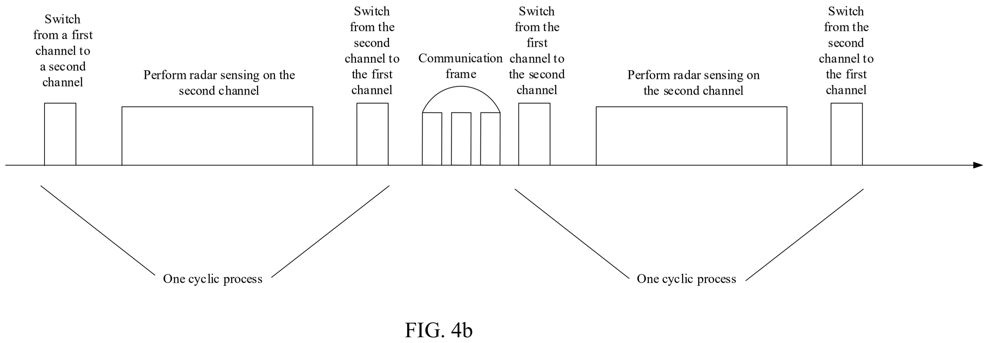

In this embodiment of this application, a process in which the wireless device switches from the first channel to the second channel, performs radar sensing on the second channel, and switches from the second channel to the first channel is referred to as a cyclic process. FIG. 4b shows an example of a cyclic process. It may be understood that when radar sensing is performed on the second channel, one or more radar sensing operations may be performed. For related descriptions of the radar sensing operation, refer to the descriptions in the foregoing embodiment.

### Details are not described herein again.

One radar sensing procedure may include one or more cyclic processes. If one radar sensing procedure includes a plurality of cyclic processes, the plurality of cyclic processes are continuous in terms of time, and that the plurality of cyclic processes are continuous in terms of time may be understood as that an end of a previous cyclic process in the plurality of cyclic processes is a start point of a next cyclic process. As shown in FIG. 4b, two cyclic processes that are continuous in terms of time are used as an example. The end of the previous cyclic process is from switching from the second channel to the first channel, and the start point of the next cyclic process is from switching from the first channel to the second channel.

For example, communication frame transmission exists between two adjacent cyclic processes in the plurality of cyclic processes. In other words, the end of the previous cyclic process is switching to the first channel. After performing communication frame transmission on the first channel, the wireless device may perform the next cyclic process, that is, switch from the first channel to the second channel. As shown in FIG. 4b, the communication frame transmission exists between the two adjacent cyclic processes.

The following separately describes examples in which the one radar sensing procedure includes one cyclic process or a plurality of cyclic processes.

Manner 1: The one radar sensing procedure includes one cyclic process.

For example, in Manner 1, when the wireless device performs radar sensing on the second channel, the wireless device may perform a preset quantity of radar sensing operations, and then switch to the first channel. For example, the Manner 1 may be applicable to a wireless device that has a low requirement for a WLAN delay and throughput.

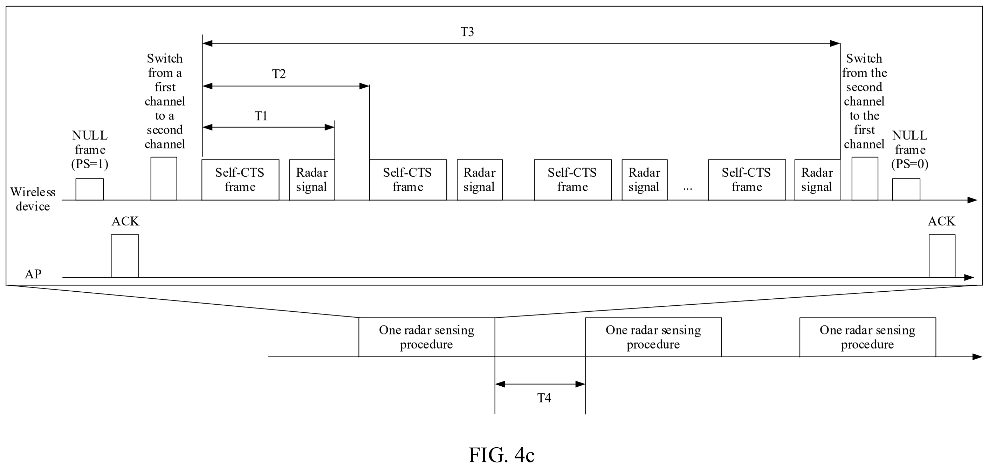

The following describes, with reference to FIG. 4c, an example in which the first frame and the second frame are NULL frames. The wireless device may be a STA. It may be understood that the first frame and the second frame may alternatively be other frames. This is not limited in this application. FIG. 4c is a diagram of a time sequence of a radar sensing procedure. In one radar sensing procedure, the wireless device claims a sleep state by using a NULL frame, and switches from the first channel to the second channel. After radar sensing is performed on the second channel, the wireless device switches from the second channel to the first channel, and claims an awake state by using a NULL frame. In FIG. 4c, a horizontal axis represents time, and all radar sensing visible to an air interface is performed in the radar sensing procedure. The communication frame transmission in this embodiment exists only in time T4 between two adjacent radar sensing procedures, and does not exist in the radar sensing procedure. A value range of T4 depends on a specific service requirement.

The following describes an example of one radar sensing procedure with reference to FIG. 4c. The wireless device sends, on the first channel, a NULL frame whose PS bit is equal to 1. After the wireless device receives an ACK frame returned by an associated AP on the first channel, the wireless device switches from the first channel to the second channel that occupies relatively fewer air interfaces. The wireless device performs radar sensing on the second channel, including sending a Self-CTS frame and a radar signal associated with the Self-CTS frame. After the radar sensing performed on the second channel ends, the wireless device switches from the second channel to the first channel, and then sends, on the first channel, the NULL frame whose PS bit is equal to 0. The wireless device receives the ACK frame returned by the associated AP on the first channel.

For example, a value range of T1 in FIG. 4c may be 50 µs to 500 µs. A start time difference between two radar sensing operations may be T2, and a value range of T2 may be 1 ms to 10 ms. Duration of all radar sensing operations in the one radar sensing procedure may be T3, and a value range of T3 may be 50 µs to 1000 ms.

Manner 2: The one radar sensing procedure includes a plurality of cyclic processes.

For example, in Manner 2, when the wireless device performs radar sensing on the second channel, the wireless device may perform one or more radar sensing operations, and then switch to the first channel. In subsequent examples, the wireless device performing one radar sensing operation on the second channel and then switching to the first channel is used as an example.

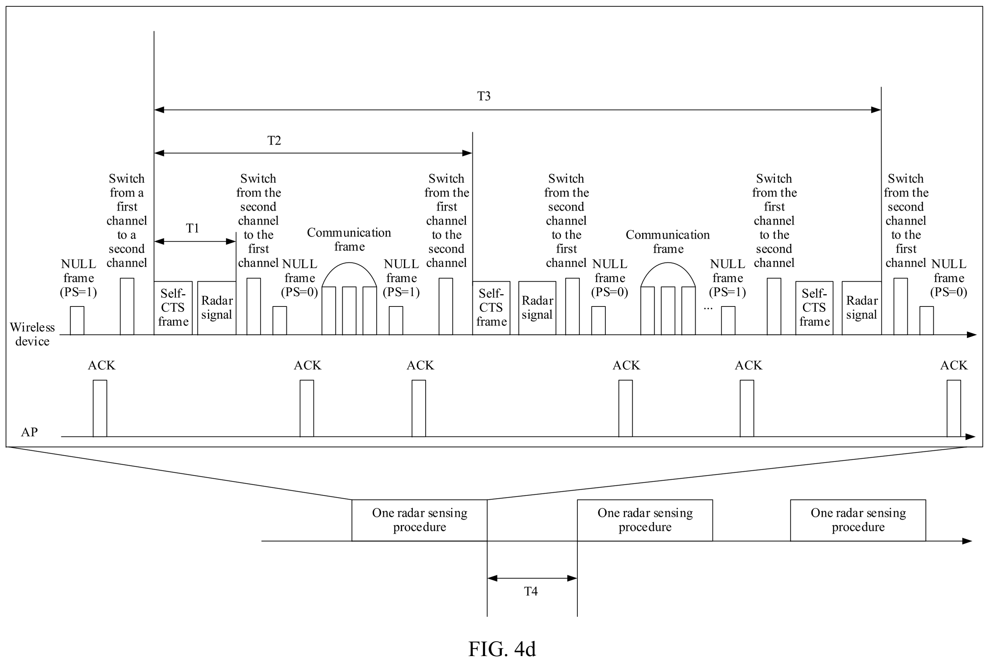

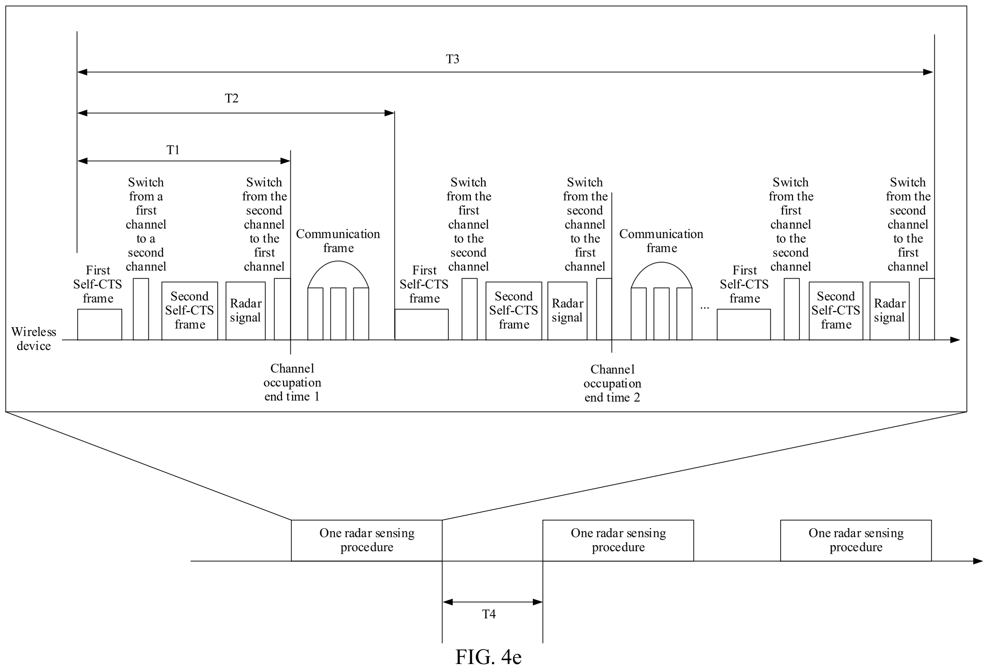

The following describes, with reference to FIG. 4d and FIG. 4e, an example in which the one radar sensing procedure includes the plurality of cyclic processes. In FIG. 4d, the first frame and the second frame being NULL frames is used as example, and in FIG. 4e, the first frame and the second frame are Self-CTS frames is used as example. It may be understood that the first frame and the second frame may alternatively be other frames. This is not limited in this application. In FIG. 4d, the wireless device may be a STA, and in FIG. 4e, the wireless device may be a STA or an AP.

FIG. 4d is a diagram of a time sequence of a radar sensing procedure. In one radar sensing procedure, the wireless device claims a sleep state and an awake state for a plurality of times by using a NULL frame, to implement a plurality of times of switching from the first channel to the second channel and a plurality of times of switching from the second channel to the first channel. After switching from the first channel to the second channel, the wireless device may perform one or more radar sensing operations on the second channel. In FIG. 4d, one radar sensing operation is used as an example. In FIG. 4d, a horizontal axis represents time, and all radar sensing visible to an air interface is performed in the radar sensing procedure. The communication frame transmission in this embodiment may exist in time T4 between two adjacent radar sensing procedures, or may exist in the radar sensing procedure. A value range of T4 depends on a specific service requirement.

The following describes an example of one radar sensing procedure with reference to FIG. 4d. Before each radar sensing operation, the wireless device sends, on the first channel, a NULL frame whose PS bit is equal to 1. After the wireless device receives an ACK frame returned by an associated AP on the first channel, the wireless device switches from the first channel to the second channel that occupies relatively fewer air interfaces. After each radar sensing operation, the wireless device first switches from the second channel to the first channel, and then sends, on the first channel, the NULL frame whose PS bit is equal to 0. The wireless device receives the ACK frame returned by the associated AP on the first channel. When the wireless device receives the ACK frame returned by the AP, the wireless device may perform communication frame transmission on the first channel. In FIG. 4d, remaining air interface time between two adjacent radar sensing operations may be used by the wireless device to perform communication frame transmission. If the AP is not notified for some reasons that the wireless device is already in an awake state, the remaining air interface time between the two radar sensing operations cannot be used to perform communication frame transmission.

For example, a value range of T1 in FIG. 4d may be 50 µs to 500 µs. A start time difference between two radar sensing operations is T2, and a value range of T2 may be 1 ms to 10 ms. Duration of all radar sensing operations in the one radar sensing procedure is T3, and a value range of T3 may be 50 µs to 1000 ms.

FIG. 4e is a diagram of a time sequence of a radar sensing procedure. In one radar sensing procedure, the wireless device may implement channel switching for a plurality of times by using Self-CTS frame. Each time before performing a radar sensing operation, the wireless device switches from the first channel to the second channel by using a Self-CTS frame. After performing radar sensing on the second channel, the wireless device switches from the second channel to the first channel. For ease of differentiation, in FIG. 4e, a Self-CTS frame that triggers channel switching is referred to as a first Self-CTS frame, and a Self-CTS frame in the radar sensing operation is referred to as a second Self-CTS frame. In the figure, a horizontal axis represents time, and all radar sensing states visible to an air interface is performed in the one radar sensing procedure. The communication frame transmission in this embodiment may exist in time T4 between two adjacent radar sensing procedures, or may exist in the radar sensing procedure. A value range of T4 depends on a specific service requirement.

The following describes an example of one radar sensing procedure with reference to FIG. 4e. Before each radar sensing operation, the wireless device sends a first Self-CTS frame on the first channel, and an NAV of the first Self-CTS frame needs to be set to be capable of protecting time at which the wireless device switches from the second channel to the first channel or time after time at which the wireless device switches from the second channel to the first channel. As shown in FIG. 4e, an NAV of a 1^{st} first Self-CTS frame needs to protect at least channel occupation end time 1, and an NAV of a 2^{nd} first Self-CTS frame needs to protect at least channel occupation end time 2. After sending the first Self-CTS frame on the first channel, the wireless device switches from the first channel to the second channel that occupies relatively fewer air interfaces, and performs the radar sensing operation on the second channel, including sending, on the second channel, a second Self-CTS frame and a radar signal associated with the second Self-CTS frame. An NAV of the second Self-CTS frame needs to protect at least a moment at which sending of the radar signal associated with the second Self-CTS frame ends. In comparison with FIG. 4d, the manner provided in FIG. 4e is simpler, and fewer air interface time is wasted.

In some implementations, a process of sending the first Self-CTS frame on the first channel, switching from the first channel to the second channel, sending the second Self-CTS frame on the second channel, sending the radar signal associated with the second Self-CTS frame on the second channel, and switching from the second channel to the first channel may be referred to as one radar sensing operation. Duration of one radar sensing operation is T1. For example, a value range of T1 is 150 µs to 600 µs. A start time difference between two radar sensing operations is T2, and a value range of T2 may be 1 ms to 10 ms. All T2s in one radar sensing procedure may be a same value or may be different values. Duration of all radar sensing operations in the one radar sensing procedure is T3, and a value range of T3 may be 150 µs to 1000 ms, that is, the one radar sensing procedure is allowed to include one radar sensing operation. It may be understood that the foregoing one radar sensing operation is merely an example.

FIG. 5a is a schematic flowchart of still another channel switching method according to an embodiment of this application. FIG. 1 may be an architectural diagram of a system to which the channel switching method is applicable. As shown in FIG. 5a, the method may include: 301 to 304. An execution sequence of the steps is not limited in this embodiment of this application. The channel switching method in this embodiment of this application may include some or all of the following steps, for example, may include steps 301 to 303 in steps 301 to 304. This is not limited in this application. The following describes the steps by using examples.

301: A wireless device adjusts an operating bandwidth from a first bandwidth to a second bandwidth.

In some embodiments, an original operating bandwidth of the wireless device is the first bandwidth, and the first bandwidth is a bandwidth of a first channel on which the wireless device performs communication frame transmission. When a radar sensing service needs to be started, the wireless device adjusts the operating bandwidth from the first bandwidth to the second bandwidth, where the second bandwidth is greater than the first bandwidth, and the second bandwidth is within a bandwidth range supported by the wireless device, that is, the operating bandwidth is adjusted to a larger bandwidth supported by the wireless device.

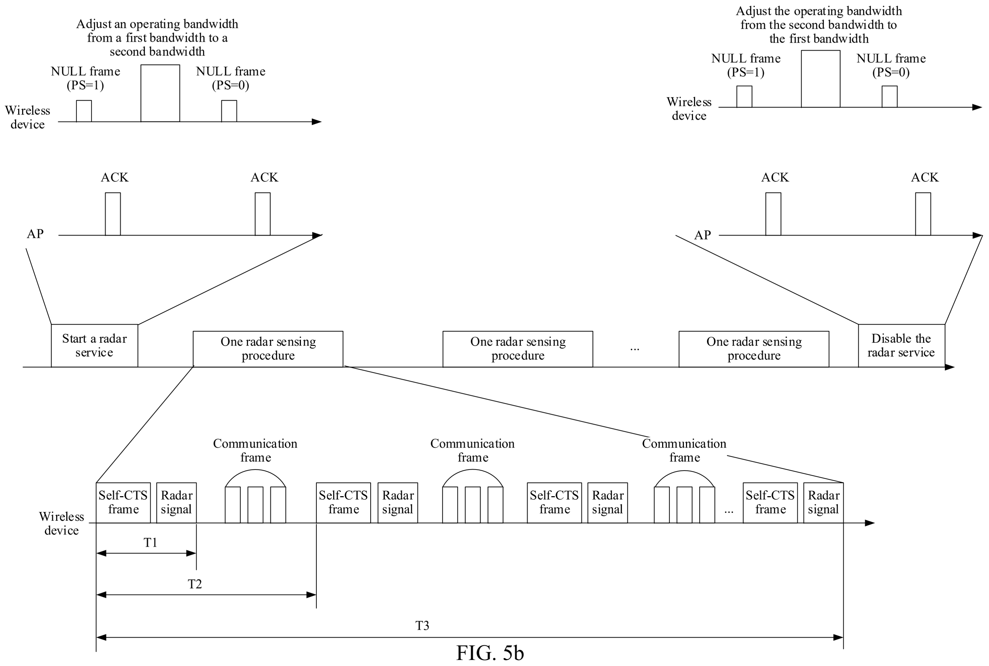

In an example, the wireless device may adjust the operating bandwidth from the first bandwidth to the second bandwidth before a plurality of radar sensing procedures. As shown in FIG. 5b, before the plurality of radar sensing procedures, the wireless device starts the radar sensing service, and adjusts the operating bandwidth from the first bandwidth to the second bandwidth. In another example, the wireless device may alternatively adjust the operating bandwidth from the first bandwidth to the second bandwidth before each radar sensing procedure, and adjust the operating bandwidth from the second bandwidth to the first bandwidth after each radar sensing procedure ends. This is not limited in this application.

In some implementations, to avoid a packet loss problem caused because another device still sends a communication frame to the wireless device on the first channel during adjustment of the operating bandwidth by the wireless device, before the wireless device adjusts the operating bandwidth from the first bandwidth to the second bandwidth, the wireless device sends a first frame on the first channel. The first frame includes first indication information or second indication information. The following separately describes the first indication information and the second indication information by using examples.

For example, the first indication information indicates that the wireless device is to stop performing communication frame transmission on the first channel. For example, the first indication information indicates that the wireless device is to enter a sleep state. For example, the first frame may be a NULL frame, and the first indication information may be carried in a PS field in the NULL frame. When the PS field includes a first identifier, it indicates that the wireless device stops performing communication frame transmission on the first channel. For example, the first identifier may be 1.

For example, the second indication information indicates time in which the wireless device occupies the first channel. Alternatively, the second indication information may indicate time at which the wireless device ends occupying the first channel. Before the time at which the wireless device ends occupying the first channel, the wireless device stops performing communication frame transmission on the first channel. Correspondingly, the another device does not send the communication frame to the wireless device before the time at which the wireless device ends occupying the first channel, to avoid the packet loss problem. In an example, the time at which the wireless device ends occupying the first channel is time at which the wireless device completes adjusting the operating bandwidth from the first bandwidth to the second bandwidth. In another example, the time at which the wireless device ends occupying the first channel may be after time at which the wireless device completes adjusting the operating bandwidth from the first bandwidth to the second bandwidth. For example, the first frame may be a Self-CTS frame, the second indication information may be carried in an NAV in the Self-CTS frame, and a value of the NAV needs to indicate at least the time at which the wireless device completes adjusting the operating bandwidth from the first bandwidth to the second bandwidth.

In some embodiments, the wireless device is a STA. After sending the first frame, the wireless device may further receive a first acknowledgement frame for the first frame on the first channel. The first acknowledgement frame may be an ACK frame. When the wireless device receives the first acknowledgement frame for the first frame on the first channel, the wireless device adjusts the operating bandwidth from the first bandwidth to the second bandwidth.

In some implementations, after the wireless device adjusts the operating bandwidth from the first bandwidth to the second bandwidth, the wireless device sends a second frame on the first channel, where the second frame includes third indication information, and the third indication information indicates that the wireless device is to start to perform communication frame transmission on the first channel. For example, the third indication information indicates that the wireless device is to be in an awake state. When the wireless device is in the awake state, the wireless device may perform communication frame transmission on the first channel. For example, the second frame may be a NULL frame, and the third indication information may be carried in a PS field in the NULL frame. When the PS field includes a second identifier, it indicates that the wireless device may start to perform communication frame transmission on the first channel. For example, the second identifier may be 0.

In some embodiments, the wireless device is a STA. After sending the second frame, the wireless device may further receive a second acknowledgement frame for the second frame on the first channel. The second acknowledgement frame may be an ACK frame. When the wireless device receives a second acknowledgement frame for the second frame on the first channel, the wireless device may perform step 302 and step 303.

In this embodiment of this application, the adjusted second bandwidth is a bandwidth of a second channel on which the wireless device performs radar sensing. In some implementations, a primary channel on the first channel is the same as a primary channel on the second channel. In other words, when the wireless device adjusts the operating bandwidth, the primary channel is not changed.

302: The wireless device performs communication frame transmission on the first channel.

303: The wireless device performs radar sensing on the second channel.

In some embodiments, the wireless device may perform communication frame transmission on the first channel and perform radar sensing on the second channel in a time division manner. Before performing communication frame transmission on the first channel, the wireless device needs to stop performing radar sensing on the second channel; or before performing radar sensing on the second channel, the wireless device needs to stop performing communication frame transmission on the first channel. FIG. 5b is a diagram of a time sequence of one radar sensing procedure. A horizontal axis in FIG. 5b represents time. After one radar sensing operation is performed on the second channel, radar sensing is stopped, and communication frame transmission is performed on the first channel. Before a next radar sensing operation is started on the second channel, communication frame transmission on the first channel needs to be stopped.

304: The wireless device adjusts the operating bandwidth from the second bandwidth to the first bandwidth.

When the radar sensing service needs to be disabled, the wireless device adjusts the operating bandwidth from the second bandwidth to the first bandwidth, to save bandwidth resources. In an example, after a plurality of radar sensing procedures are performed, the radar sensing service may be disabled, and the operating bandwidth is adjusted from the second bandwidth to the first bandwidth. In another example, the wireless device may adjust the operating bandwidth from the second bandwidth to the first bandwidth after each radar sensing procedure.

In some implementations, to avoid a packet loss problem caused because another device still sends a communication frame to the wireless device on the first channel during adjustment of the operating bandwidth by the wireless device, before the wireless device adjusts the operating bandwidth from the second bandwidth to the first bandwidth, the wireless device sends a third frame on the first channel. The third frame includes first indication information or second indication information. The following separately describes the first indication information and the second indication information by using examples.

For example, the first indication information indicates that the wireless device is to stop performing communication frame transmission on the first channel. For example, the first indication information indicates that the wireless device is to enter a sleep state. For example, the third frame may be a NULL frame, and the first indication information may be carried in a PS field in the NULL frame. When the PS field includes a first identifier, it indicates that the wireless device stops performing communication frame transmission on the first channel. For example, the first identifier may be 1.

For example, the second indication information indicates time in which the wireless device occupies the first channel. For example, the second indication information may indicate time at which the wireless device ends occupying the first channel. Before the time at which the wireless device ends occupying the first channel, the wireless device stops performing communication frame transmission on the first channel. Correspondingly, the another device does not send the communication frame to the wireless device before the time at which the wireless device ends occupying the first channel, to avoid the packet loss problem. In an example, the time at which the wireless device ends occupying the first channel is time at which the wireless device completes adjusting the operating bandwidth from the second bandwidth to the first bandwidth. In another example, the time at which the wireless device ends occupying the first channel may be after time at which the wireless device completes adjusting the operating bandwidth from the second bandwidth to the first bandwidth. For example, the third frame may be a Self-CTS frame, the second indication information may be carried in an NAV in the Self-CTS frame, and a value of the NAV needs to indicate at least the time at which the wireless device completes adjusting the operating bandwidth from the second bandwidth to the first bandwidth.

In some embodiments, the wireless device is a STA. After sending the third frame, the wireless device may further receive a third acknowledgement frame for the third frame on the first channel. The third acknowledgement frame may be an ACK frame. When the wireless device receives the third acknowledgement frame for the third frame on the first channel, the wireless device adjusts the operating bandwidth from the second bandwidth to the first bandwidth.

In some implementations, after the wireless device adjusts the operating bandwidth from the second bandwidth to the first bandwidth, the wireless device sends a fourth frame on the first channel, where the fourth frame includes third indication information, and the third indication information indicates that the wireless device is to start to perform communication frame transmission on the first channel. For example, the third indication information indicates that the wireless device is to be in an awake state. When the wireless device is in the awake state, the wireless device may perform communication frame transmission on the first channel. For example, the second frame may be a NULL frame, and the third indication information may be carried in a PS field in the NULL frame. When the PS field includes a second identifier, it indicates that the wireless device may start to perform communication frame transmission on the first channel. For example, the second identifier may be 0.

In some embodiments, the wireless device is a STA. After sending the fourth frame, the wireless device may further receive a fourth acknowledgement frame for the fourth frame on the first channel. The fourth acknowledgement frame may be an ACK frame. When the wireless device receives the fourth acknowledgement frame for the fourth frame on the first channel, the wireless device may perform communication frame transmission on the first channel.

In this embodiment, the communication frame transmission is still transmitted on the first channel, and radar sensing is performed on the second channel whose bandwidth is broadened, thereby maximizing radar sensing performance, and minimizing impact on the communication frame transmission.

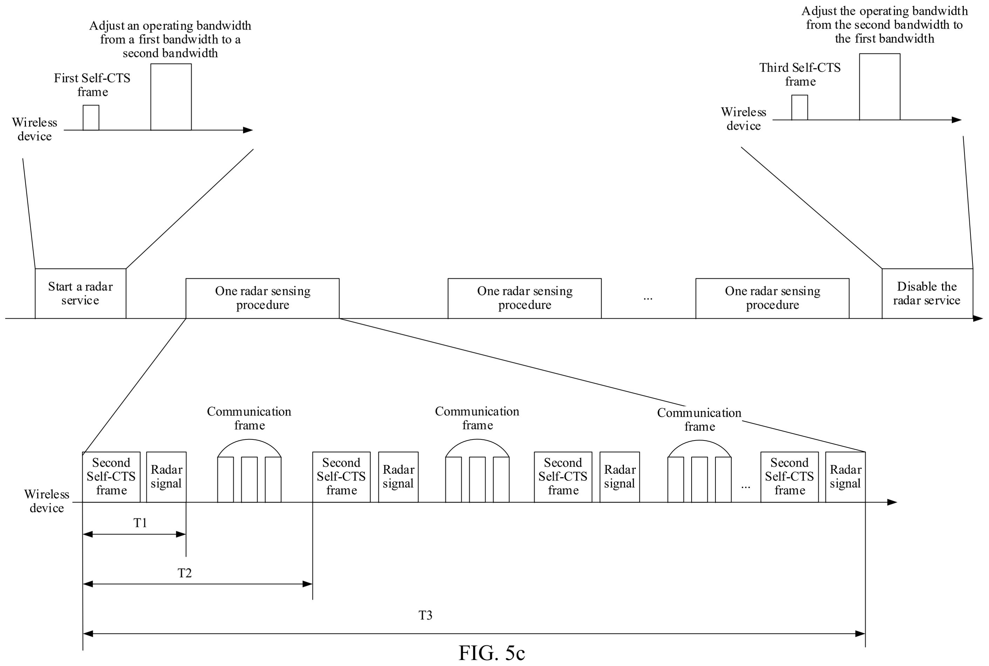

The following describes FIG. 5a by using an example with reference to FIG. 5b and FIG. 5c. In FIG. 5b, an example in which the first frame, the second frame, the third frame, and the fourth frame are NULL frames is used, and in FIG. 5c, an example in which the first frame, the second frame, the third frame, and the fourth frame are Self-CTS frames is used.

FIG. 5b is a diagram of operating bandwidth adjustment according to an embodiment of this application. In FIG. 5b, all radar sensing operations visible to an air interface are performed in the radar sensing procedure. The communication frame transmission in this embodiment may exist in time T4 between two adjacent radar sensing procedures, or may exist in the radar sensing procedure. A value range of T4 may depend on a specific service requirement.

There is one radar service start procedure before all radar sensing procedures. In the radar service start procedure, the wireless device first sends a NULL frame whose PS bit is equal to 1. After the wireless device receives an ACK frame returned by an associated AP, the wireless device reconfigures the wireless device to work on a larger bandwidth when ensuring that the first channel used to perform communication frame transmission remains unchanged. The bandwidth of the first channel may be the first bandwidth. For example, the adjusted operating bandwidth is the second bandwidth. After adjusting the operating bandwidth from the first bandwidth to the second bandwidth, the wireless device sends a NULL frame whose PS bit is equal to 0, and the wireless device receives an ACK frame returned by the associated AP.

If a radar sensing function needs to be disabled, the wireless device starts a radar service disabling procedure after all radar sensing procedures. In the procedure, the wireless device first sends a NULL frame whose PS bit is equal to 1. After receiving an ACK frame returned by an associated AP, the wireless device restores the original first bandwidth when ensuring that the first channel used to perform communication frame transmission remains unchanged, that is, the wireless device adjusts the operating bandwidth from the second bandwidth to the first bandwidth. After the bandwidth is adjusted, the wireless device sends a NULL frame whose PS bit is equal to 0, and the wireless device receives an ACK frame returned by the associated AP.

Self-CTS in the radar sensing operation in this embodiment of this application needs to cover an entire newly configured operating bandwidth, namely, the second bandwidth, in a non-high throughput duplicate (Non-High Throughput, Non-HT duplicate) form. For example, when the communication frame transmission is performed, the bandwidth of the first channel is 80 MHz, and the adjusted second bandwidth is 160 MHz. In this case, the Self-CTS frame sent by the wireless device occupies 160 MHz.

FIG. 5c is a diagram of operating bandwidth adjustment according to an embodiment of this application. In FIG. 5c, all radar sensing operations visible to an air interface are performed in the radar sensing procedure. The communication frame transmission in this embodiment may exist in time T4 between two adjacent radar sensing procedures, or may exist in the radar sensing procedure. A value range of T4 may depend on a specific service requirement.

There is one radar service start procedure before all radar sensing procedures. In the radar service start procedure, the wireless device first sends a first Self-CTS frame, and an NAV in the first Self-CTS frame needs to protect at least time at which the wireless device completes adjusting the operating bandwidth from the first bandwidth to the second bandwidth. After sending the first Self-CTS frame, the wireless device adjusts the operating bandwidth from the first bandwidth to the second bandwidth.

If a radar sensing function needs to be disabled, the wireless device starts a radar service disabling procedure after all radar sensing procedures. In the procedure, the wireless device sends a third Self-CTS frame, and an NAV in the third Self-CTS frame needs to protect at least time at which the wireless device completes adjusting the operating bandwidth from the second bandwidth to the first bandwidth. After the wireless device sends the third Self-CTS frame, the wireless device adjusts the operating bandwidth from the second bandwidth to the first bandwidth. The wireless device may continue to perform communication frame transmission on the first bandwidth.

Second Self-CTS in the radar sensing operation in this embodiment of this application needs to cover an entire newly configured operating bandwidth, namely, the second bandwidth, in a non-HT duplicate form. For example, when the communication frame transmission is performed, the bandwidth of the first channel is 80 MHz, and the adjusted second bandwidth is 160 MHz. In this case, the second Self-CTS frame sent by the wireless device occupies 160 MHz.

A value range of T1 in FIG. 5b and FIG. 5c may be 50 µs to 500 µs. A start time difference between two radar sensing operations is T2, and a value range of T2 may be 1 ms to 10 ms. Duration of all radar sensing operations in the one radar sensing procedure is T3, and a value range of T3 may be 50 µs to 1000 ms. For definitions of T1, T2, and T3, refer to the descriptions in the embodiment in FIG. 2b. Details are not described herein again.

The following describes a communication apparatus provided in embodiments of this application.

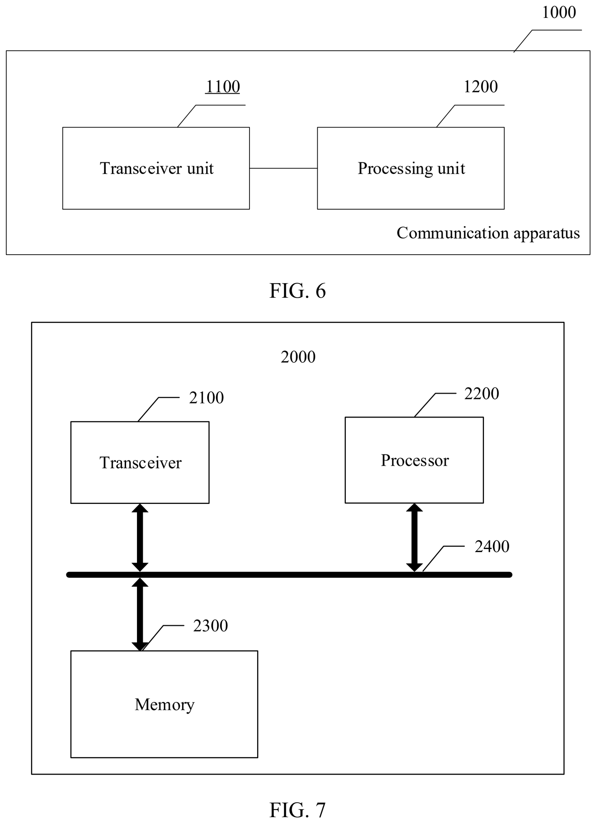

In this application, division into functional modules is performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely logical function division. During actual implementation, another division manner may be used. The following describes in detail a communication apparatus in embodiments of this application with reference to FIG. 6 to FIG. 8.

FIG. 6 is a diagram of a structure of a communication apparatus according to an embodiment of this application. As shown in FIG. 6, the communication apparatus 1000 may correspondingly implement functions or steps implemented by a wireless device in the foregoing method embodiments. The communication apparatus may include a processing unit 1200 and a transceiver unit 1100. Optionally, the communication apparatus may further include a storage unit. The storage unit may be configured to store instructions (code or a program) and/or data. The processing unit 1200 and the transceiver unit 1100 may be coupled to the storage unit. For example, the processing unit 1200 may read the instructions (the code or the program) and/or the data in the storage unit, to implement a corresponding method. The foregoing units may be independently disposed, or may be partially or completely integrated. For example, the transceiver unit 1100 may include a sending unit and a receiving unit. The sending unit may be a transmitter, and the receiving unit may be a receiver. An entity corresponding to the transceiver unit 1100 may be a transceiver.

In some possible implementations, the communication apparatus 1000 can correspondingly implement the behavior and the function of the wireless device in the foregoing method embodiments. For example, the communication apparatus 1000 may be a wireless device, or may be a component (for example, a chip or a circuit) used in the wireless device. The transceiver unit 1100 may be, for example, configured to perform all receiving or sending operations performed by the wireless device in the embodiments in FIG. 3, FIG. 4a, and FIG. 5a. The processing unit 1200 is configured to perform all operations, other than receiving and sending operations, performed by the wireless device.

In a possible design, the communication apparatus 1000 includes: a processing unit 1200 and a transceiver unit 1100.

The transceiver unit 1100 is configured to: perform communication frame transmission on a first channel, and perform radar sensing on a second channel, where
before performing communication frame transmission on the first channel, the transceiver unit 1100 stops performing radar sensing on the second channel; or before performing radar sensing on the second channel, the transceiver unit 1100 stops performing communication frame transmission on the first channel.

In a possible implementation, the communication apparatus further includes:
a processing unit 1200, configured to switch from the first channel to the second channel, where
the first channel and the second channel are different channels supported by the wireless device.

In a possible implementation, the first channel is a channel that is detected to be busy by the wireless device, and the second channel is a channel that is detected to be idle by the wireless device.

In a possible implementation, the processing unit 1200 is further configured to switch from the second channel to the first channel; and
the transceiver unit 1100 is further configured to continue to perform communication frame transmission on the first channel.

In a possible implementation, one radar sensing procedure includes one cyclic process or a plurality of cyclic processes, and the plurality of cyclic processes are continuous in terms of time;
one cyclic process includes a process of switching from the first channel to the second channel, performing radar sensing on the second channel, and switching from the second channel to the first channel; and
the one radar sensing procedure is a procedure including a preset quantity of radar sensing operations, a time interval between two adjacent radar sensing operations in the preset quantity of radar sensing operations is a first time interval, and one radar sensing operation includes sending a self clear to send Self-CTS frame and sending a radar signal associated with the Self-CTS frame.

In a possible implementation, the second channel includes the first channel, and a bandwidth of the second channel is greater than a bandwidth of the first channel.

In a possible implementation, a primary channel on the first channel is the same as a primary channel on the second channel.

In a possible implementation, the processing unit 1200 is further configured to: when a radar sensing service needs to be started, the wireless device adjusts an operating bandwidth from a first bandwidth to a second bandwidth, where the first bandwidth is the bandwidth of the first channel, and the second bandwidth is the bandwidth of the second channel.

In a possible implementation, the transceiver unit 1100 is further configured to send a first frame on the first channel, where the first frame includes first indication information, and the first indication information indicates that the wireless device is to stop performing communication frame transmission on the first channel; or
the first frame includes second indication information, the second indication information indicates time in which the wireless device occupies the first channel, and before time at which the wireless device ends occupying the first channel, the wireless device stops performing communication frame transmission on the first channel.

In a possible implementation, the wireless device is a station STA, and the transceiver unit 1100 is specifically configured to receive a first acknowledgement frame for the first frame on the first channel.

In a possible implementation, the transceiver unit 1100 is further configured to send a second frame on the first channel, where the second frame includes third indication information, and the third indication information indicates that the wireless device is to start to perform communication frame transmission on the first channel.

In a possible implementation, the transceiver unit 1100 is further configured to receive a second acknowledgement frame for the second frame on the first channel.

In a possible implementation, the time at which the wireless device ends occupying the first channel is time at which the wireless device switches from the second channel to the first channel, or the time at which the wireless device ends occupying the first channel is after time at which the wireless device switches from the second channel to the first channel.

In a possible implementation, the time at which the wireless device ends occupying the first channel is time at which the wireless device completes adjusting the operating bandwidth from the first bandwidth to the second bandwidth, or the time at which the wireless device ends occupying the first channel is after time at which the wireless device completes adjusting the operating bandwidth from the first bandwidth to the second bandwidth.

In a possible implementation, the processing unit 1200 is further configured to: when the radar sensing service needs to be stopped, adjust the operating bandwidth from the second bandwidth to the first bandwidth.

For specific descriptions and beneficial effect of the apparatus embodiment shown in FIG. 6, refer to the descriptions of the foregoing method embodiments. Details are not described herein again.

The foregoing describes the wireless device in embodiments of this application, and the following describes a possible product form of the wireless device. It should be understood that a product in any form that has a function of the wireless device in FIG. 6 or a product in any form that has a function of the wireless device in FIG. 6 falls within the protection scope of embodiments of this application. It should be further understood that the following descriptions are merely examples, and a product form of the wireless device in embodiments of this application is not limited thereto.

In a possible implementation, in the communication apparatus shown in FIG. 6, the processing unit 1200 may be one or more processors; and the transceiver unit 1100 may be a transceiver or the transceiver unit 1100 may be a sending unit and a receiving unit, the sending unit may be a transmitter, the receiving unit may be a receiver, and the sending unit and the receiving unit are integrated into one device, for example, a transceiver. In embodiments of this application, the processor and the transceiver may be coupled, or the like. A manner of a connection between the processor and the transceiver is not limited in embodiments of this application.

FIG. 7 is a diagram of a structure of another communication apparatus 2000 according to an embodiment of this application.

As shown in FIG. 7, the communication apparatus 2000 includes one or more processors 2200 and a transceiver 2100. The transceiver 2100 may implement a function of the transceiver unit 1100, and the processor 2200 may implement a function of the processing unit 1200.

In various implementations of the communication apparatus shown in FIG. 7, the transceiver may include a receiver and a transmitter, the receiver is configured to perform the receiving function (or operation), and the transmitter is configured to perform the transmitting function (or operation). The transceiver is configured to communicate with another device/apparatus through a transmission medium.

Optionally, the communication apparatus 2000 may further include one or more memories 2300, configured to store program instructions and/or data. The memory 2300 is coupled to the processor 2200. The coupling in this embodiment of this application may be an indirect coupling or a communication connection between apparatuses, units, or modules in an electrical form, a mechanical form, or another form, and is used for information exchange between the apparatuses, the units, or the modules. The processor 2200 may cooperate with the memory 2300. The processor 2200 may execute the program instructions stored in the memory 2300.

In this embodiment of this application, a specific connection medium between the transceiver 2100, the processor 2200, and the memory 2300 is not limited. In this embodiment of this application, the transceiver 2100, the processor 2200, and the memory 2300 are connected through a bus 2400 in FIG. 7. The bus is represented by using a bold line in FIG. 7. A manner of a connection between other components is schematically described, and is not limited thereto. The bus may be classified into an address bus, a data bus, a control bus, and the like. For ease of representation, only one bold line is used for representation in FIG. 7, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware in the processor and a software module, or the like.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 2200 is mainly configured to process a communication protocol and communication data, control the entire communication apparatus, execute a software program, and process data of the software program. The memory 2300 is mainly configured to store the software program and data. The transceiver 2100 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 2200 may read the software program in the memory 2300, explain and execute instructions of the software program, and process data of the software program. When data needs to be sent in a wireless manner, after performing baseband processing on the to-be-sent data, the processor 2200 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2200. The processor 2200 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in embodiments of this application may alternatively include more components than those shown in FIG. 7, or the like. This is not limited in embodiments of this application. The methods performed by the processor and the transceiver are merely examples. For specific steps performed by the processor and the transceiver, refer to the methods described above.

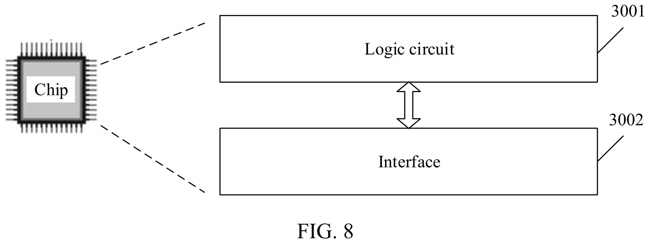

In another possible implementation, in the communication apparatus shown in FIG. 6, the processing unit 1200 may be one or more logic circuits, and the transceiver unit 1100 may be an input/output interface, or referred to as a communication interface, an interface circuit, an interface, or the like. Alternatively, the transceiver unit 1100 may be a sending unit and a receiving unit. The sending unit may be an output interface, and the receiving unit may be an input interface. The sending unit and the receiving unit are integrated into one unit, for example, an input/output interface. As shown in FIG. 8, the communication apparatus shown in FIG. 8 includes a logic circuit 3001 and an interface 3002. That is, the processing unit 1200 may be implemented through the logic circuit 3001, and the transceiver unit 1100 may be implemented through the interface 3002. The logic circuit 3001 may be a chip, a processing circuit, an integrated circuit, a system on chip (system on chip, SoC) chip, or the like. The interface 3002 may be a communication interface, an input/output interface, a pin, or the like. For example, FIG. 8 is an example in which the communication apparatus is a chip. The chip includes the logic circuit 3001 and the interface 3002.

In embodiments of this application, the logic circuit and the interface may be coupled to each other. A specific manner of a connection between the logic circuit and the interface is not limited in embodiments of this application.

It may be understood that the communication apparatus shown in embodiments of this application may implement the method provided in embodiments of this application in a form of hardware, or may implement the method provided in embodiments of this application in a form of software. This is not limited in embodiments of this application.

An embodiment of this application further provides a wireless communication system. The wireless communication system includes an AP and a STA, and the AP and the STA may be configured to perform the method in any one of the foregoing embodiments.

In addition, this application further provides a computer-readable storage medium. The computer-readable storage medium stores computer code. When the computer code is run on a computer, the computer is enabled to perform operations and/or processing performed by the wireless device in the method provided in this application.

This application further provides a computer program product. The computer program product includes computer code or a computer program. When the computer code or the computer program is run on a computer, operations and/or processing performed by the wireless device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of software product. The computer software product is stored in a readable storage medium and includes several instructions for instructing a computer device (which may be a personal computer, a server, a network device, or the like) to perform all or some of the steps in the method described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel switching method, comprising:
performing, by a wireless device, communication frame transmission on a first channel, and performing radar sensing on a second channel; and
before performing communication frame transmission on the first channel, stopping, by the wireless device, performing radar sensing on the second channel; or before performing radar sensing on the second channel, stopping, by the wireless device, performing communication frame transmission on the first channel.

2. The method according to claim 1, wherein before performing radar sensing on the second channel, the method further comprises:
switching, by the wireless device, from the first channel to the second channel, wherein
the first channel and the second channel are different channels supported by the wireless device.

3. The method according to claim 2, wherein the first channel is a channel that is detected to be busy by the wireless device, and the second channel is a channel that is detected to be idle by the wireless device.

4. The method according to claim 2 or 3, wherein after performing radar sensing on the second channel, the method further comprises:
switching, by the wireless device, from the second channel to the first channel, and continuing to perform communication frame transmission on the first channel.

5. The method according to any one of claims 2 to 4, wherein one radar sensing procedure comprises one cyclic process or a plurality of cyclic processes, and the plurality of cyclic processes are continuous in terms of time;
one cyclic process comprises a process of switching from the first channel to the second channel, performing radar sensing on the second channel, and switching from the second channel to the first channel; and
the one radar sensing procedure is a procedure comprising a preset quantity of radar sensing operations, a time interval between two adjacent radar sensing operations in the preset quantity of radar sensing operations is a first time interval, and one radar sensing operation comprises sending a self clear to send Self-CTS frame and sending a radar signal associated with the Self-CTS frame.

6. The method according to claim 1, wherein the second channel comprises the first channel, and a bandwidth of the second channel is greater than a bandwidth of the first channel.

7. The method according to claim 6, wherein a primary channel on the first channel is the same as a primary channel on the second channel.

8. The method according to claim 6 or 7, wherein before performing, by the wireless device, communication frame transmission on the first channel, and performing radar sensing on the second channel, the method further comprises:
when a radar sensing service needs to be started, adjusting, by the wireless device, an operating bandwidth from a first bandwidth to a second bandwidth, wherein the first bandwidth is the bandwidth of the first channel, and the second bandwidth is the bandwidth of the second channel.

9. The method according to any one of claims 2 to 5 or 8, wherein before switching, by the wireless device, from the first channel to the second channel, or before adjusting, by the wireless device, the operating bandwidth from the first bandwidth to the second bandwidth, the method further comprises:
sending, by the wireless device, a first frame on the first channel, wherein the first frame comprises first indication information, and the first indication information indicates that the wireless device is to stop performing communication frame transmission on the first channel; or
the first frame comprises second indication information, the second indication information indicates time in which the wireless device occupies the first channel, and before time at which the wireless device ends occupying the first channel, the wireless device stops performing communication frame transmission on the first channel.

10. The method according to claim 9, wherein the wireless device is a station STA, and the method further comprises:
receiving, by the wireless device, a first acknowledgement frame for the first frame on the first channel.

11. The method according to claim 4 or 8, wherein after switching, by the wireless device, from the second channel to the first channel, or after adjusting, by the wireless device, the operating bandwidth from the first bandwidth to the second bandwidth, the method further comprises:
sending, by the wireless device, a second frame on the first channel, wherein the second frame comprises third indication information, and the third indication information indicates that the wireless device is to start to perform communication frame transmission on the first channel.

12. The method according to claim 11, wherein the wireless device is a station STA, and the method further comprises:
receiving, by the wireless device, a second acknowledgement frame for the second frame on the first channel.

13. The method according to claim 9, wherein the time at which the wireless device ends occupying the first channel is time at which the wireless device switches from the second channel to the first channel, or the time at which the wireless device ends occupying the first channel is after time at which the wireless device switches from the second channel to the first channel.

14. The method according to claim 9, wherein the time at which the wireless device ends occupying the first channel is time at which the wireless device completes adjusting the operating bandwidth from the first bandwidth to the second bandwidth, or the time at which the wireless device ends occupying the first channel is after time at which the wireless device completes adjusting the operating bandwidth from the first bandwidth to the second bandwidth.

15. The method according to any one of claims 8 to 14, wherein the method further comprises:
when the radar sensing service needs to be stopped, adjusting, by the wireless device, the operating bandwidth from the second bandwidth to the first bandwidth.

16. A communication apparatus, comprising a unit configured to perform the method according to any one of claims 1 to 15.

17. A communication apparatus, comprising a processor, wherein
the processor is coupled to a memory;
the memory is configured to store instructions; and
the processor is configured to execute the instructions, so that the method according to any one of claims 1 to 15 is performed.

18. A computer-readable storage medium, wherein the computer-readable storage medium is configured to store a computer program or instructions; and when the computer program or the instructions are executed, the method according to any one of claims 1 to 15 is performed.
